# EUROPEAN PATENT SPECIFICATION

(11) **EP 4 049 472 B1**
(45) Date of publication and mention of the grant of the patent: **18.09.2024**
(21) Application number: 20797953.5
(22) Date of filing: 09.10.2020
(51) Int. Cl.: H04W 12/12, H04W 4/70, H04L 67/303, H04L 9/40

(54) **MONITORING OF DEVICE OPERATION BY GROUPING**
ÜBERWACHUNG DES BETRIEBS VON VORRICHTUNGEN DURCH GRUPPIERUNG
SURVEILLANCE D'OPÉRATION DE DISPOSITIF PAR REGROUPEMENT

(30) Priority: 23.10.2019 US 201916661840
(43) Date of publication of application: 31.08.2022
(73) Proprietor: Microsoft Technology Licensing, LLC, Redmond, WA 98052-6399 (US)
(72) Inventor: BARGURY, Michael Zeev, Redmond, Washington 98052-6399 (US); ISRAEL, Moshe, Redmond, Washington 98052-6399 (US); MALKA, Gal, Redmond, Washington 98052-6399 (US); BEN-DAVID, Avichai, Redmond, Washington 98052-6399 (US)
(74) Representative: Grünecker Patent- und Rechtsanwälte PartG mbB
(86) International application number: PCT/US2020/054885
(87) International publication number: WO 2021/080796

(56) References cited:
- US-A1- 2018 375 887
- US-A1- 2019 079 476
- US-A1- 2019 182 278

## Description

### BACKGROUND

In prior times, the types of devices that had an Internet connection was fairly limited and might include conventional computers, such as desktop computers, laptops, tablet PCs, and smartphones. But more recently, the variety of devices that might have an Internet connection has quickly expanded to numerous device types. As examples, Internet connections may be found in some wearables (such as smart watches and smart glasses), household appliances (such as refrigerators and microwaves), security devices (such as cameras, door locks, window impact sensors, location trackers), smart home devices (such as temperature sensors, garage door openers, lights), and so forth. Each such Internet-enabled device has a unique identifier (such as an Internet Protocol (IP) address) and the ability to communicate over the Internet.

Internet-enabled devices often report regarding their operations to a centralized store, such as cloud-based storage. Operations of such devices are usually as expected and designed for those devices. However, an Internet-enabled device can be subject to a variety of dangers that can cause the device to operate in ways not typical for such devices. For instance, devices might behave unusually when subject to temperatures that are outside of designed operational temperature ranges, when subject to moisture or chemicals, or when infected with a computer virus.

The subject matter claimed herein is not limited to embodiments that solve any disadvantages or that operate only in environments such as those described above. Rather, this background is only provided to illustrate one exemplary technology area where some embodiments described herein may be practice. US 2018/0375887 A1 discloses a method of adaptive network protection for managed IoT services.

### BRIEF SUMMARY

The invention is defined by claims 1 and 9.

At least some embodiments described herein relate to the monitoring of operations of different types of devices to determine when the devices have varied from usual operation. As an example, the devices might be connected, directly or through a proxy, to a cloud service, and may be innumerable devices of a variety of different types. The principles described herein allow for the detection of operational problems of a wide assortment of devices (e.g., Internet of Things or "IoT") devices. Such operational problems might be caused by the physical environment of the device, or perhaps be a result of a hardware or software degradation within the device.

In accordance with the principles described herein, the operations of any number of such devices are measured. As an example, one or more operational logs may be analyzed to construct operational measurements of the devices. Based on the measurements, the devices are grouped based on the reported operations to thereby form multiple groups of devices grouped by operational similarity. Such operational measurements might be, for example, communication pattern characteristics between the devices and cloud services.

Then, standard operational characteristics are defined for each group of devices. The operational characteristics for the devices are monitored so as to detect when a particular device has varied from this defined standard operation. When a variance is detected, an alert is provided to that effect.

Thus, order is imposed on a mass of devices of widely varying types of devices (such as might be found in the Internet of Things). Without knowing ahead of time what type of devices are being monitored, the principles described herein still allow for the detection of when those devices are no longer operating properly.

This summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

In order to describe the manner in which the above-recited and other advantages and features can be obtained, a more particular description of various embodiments will be rendered by reference to the appended drawings. Understanding that these drawings depict only sample embodiments and are not therefore to be considered to be limiting of the scope of the invention, the embodiments will be described and explained with additional specificity and detail through the use of the accompanying drawings in which:
Figure 1 illustrates an environment in which the principles described herein may operate, which includes many different types of Internet-connected devices, each having different operational characteristics;
Figure 2 illustrates an environment that represents an example of the environment of Figure 1, in which the devices are now different types of cloud-connected devices, each reporting their operational characteristics into one or more operational logs;
Figure 3 illustrates a flowchart of a method for monitoring operations of different types of devices to determine and alert when the devices have varied from usual operation, in accordance with the principles described herein;
Figure 4 illustrates an example multi-dimensional space in which identifiers for the devices of Figures 1 and 2 are mapped, each dimension representing an operational parameter;
Figure 5 illustrates the multi-dimensional space of Figure 4, with associated groupings into devices of similar operations;
Figure 6 illustrates the multi-dimensional space of Figure 4, except now with standard operations defined and associated with each device group;
Figure 7 illustrates the multi-dimensional space of Figure 6, except now with the operations of several of the devices of a group deviating from the defined standard operation for that group; and
Figure 8 illustrates an example computer system in which the principles described herein may be implemented.

### DETAILED DESCRIPTION

At least some embodiments described herein relate to the monitoring of operations of different types of devices to determine when the devices have varied from usual operation. As an example, the devices might be connected, directly or through a proxy, to a cloud service, and may be innumerable devices of a variety of different types. The principles described herein allow for the detection of operational problems of a wide assortment of devices (e.g., Internet of Things or "IoT") devices. Such operational problems might be caused by the physical environment of the device, or perhaps be a result of a hardware or software degradation within the device.

In accordance with the principles described herein, the operations of any number of such devices are measured. As an example, one or more operational logs may be analyzed to construct operational measurements of the devices. Based on the measurements, the devices are grouped based on the reported operations to thereby form multiple groups of devices grouped by operational similarity. Such operational measurements might be, for example, communication pattern characteristics between the devices and cloud services.

Then, standard operational characteristics are defined for each group of devices. The operational characteristics for the devices are monitored so as to detect when a particular device has varied from this defined standard operation. When a variance is detected, an alert is provided to that effect.

Thus, order is imposed on a mass of devices of widely varying types of devices (such as might be found in the Internet of Things). Without knowing ahead of time what type of devices are being monitored, the principles described herein still allow for the detection of when those devices are no longer operating properly.

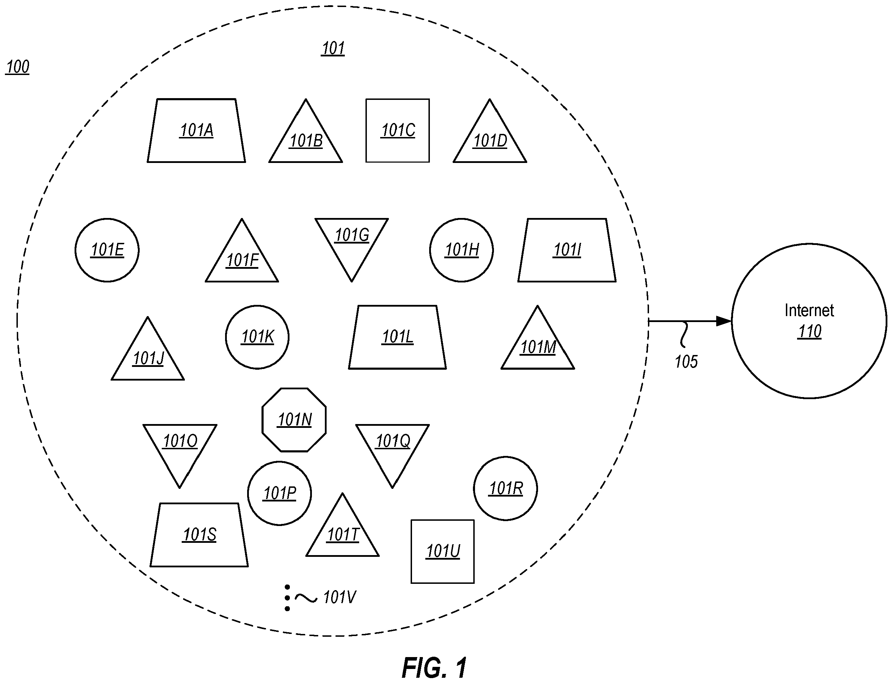

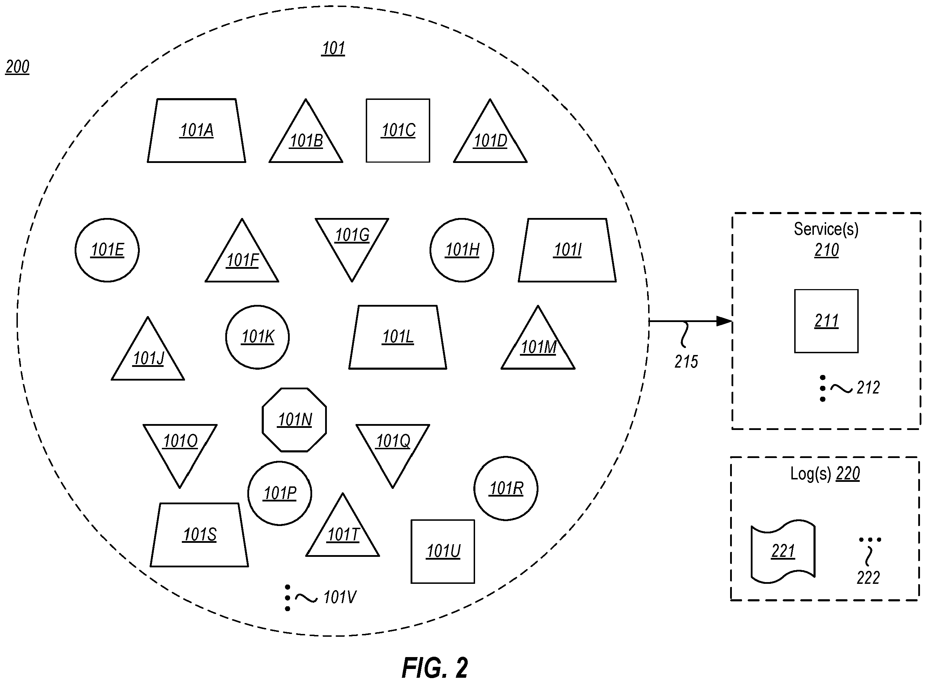

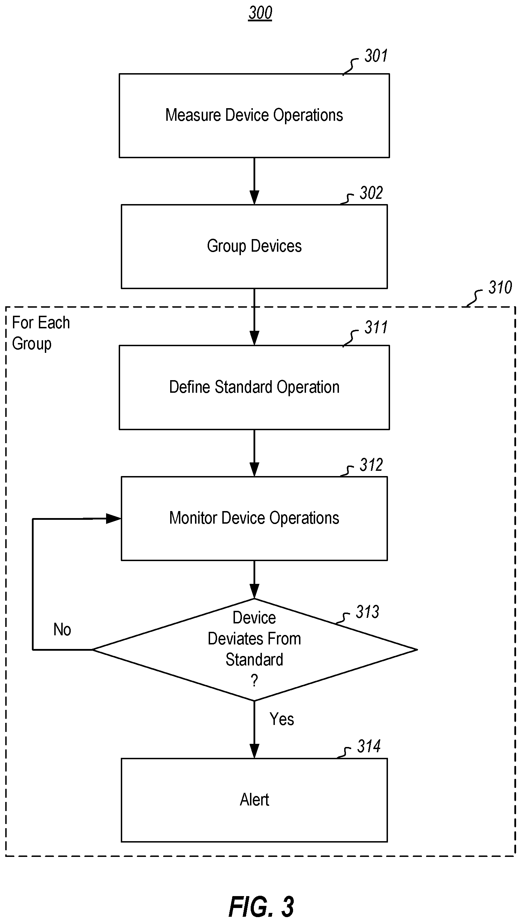

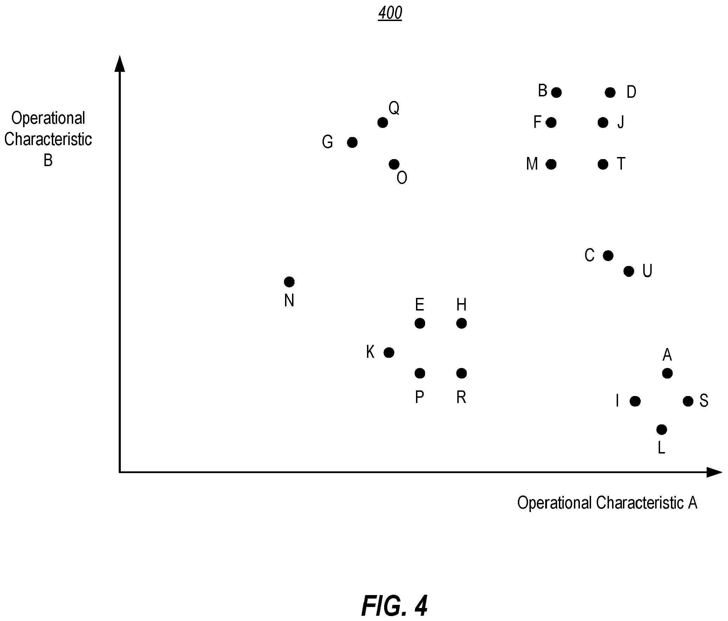

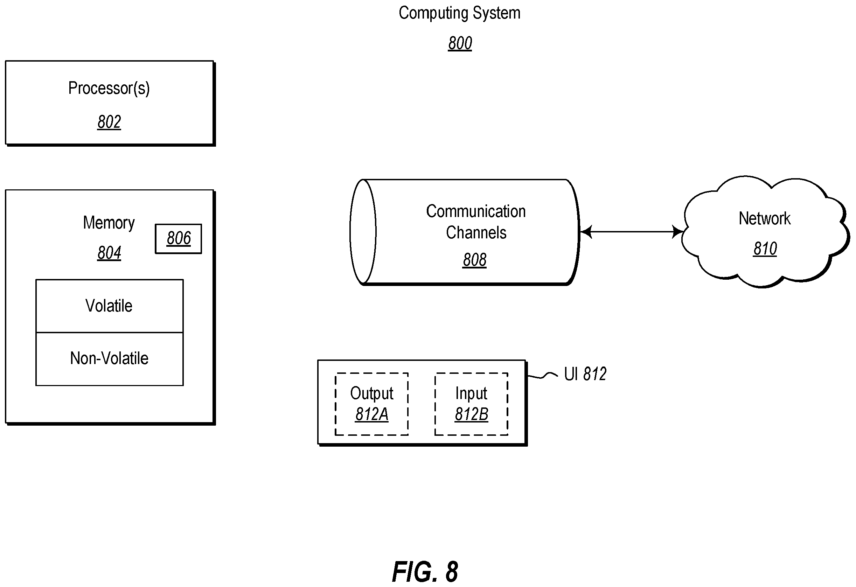

This patent application will be organized as follows. First, environments having devices of many different types and operational characteristics will be described with respect to Figure 1 and 2. Then, a method for monitoring operations of devices having different operational characteristics will be described with respect to Figure 3. Figures 4 through 7 illustrate an example of the mapping of the devices of Figures 1 and 2 to multi-dimensional space, and will be referenced frequently as an example when describing the method of Figure 3. Finally, because the principles described herein operate in the context of a computer system (e.g., a server or cloud service), a computer system will be described with respect to Figure 8.

Figure 1 illustrates an environment 100 that includes multiple devices or systems 101. Hereinafter, the devices or systems 101 will hereinafter be referred to as "devices". The devices 101 are represented in Figure 1 bounded by a dashed-lined border. In this example, the devices 101 include twenty-one devices 101A through 101U. However, the ellipsis 101V represents that there may be any number of devices 101 within the environment. As an example, there may be thousands, millions, or billions of devices that are connected (directly or through a proxy computing system) to a cloud service.

The devices 101 may be Internet of Things (IoT) devices and may also be of a wide variety of types of devices. It would be impossible to innumerate all types of devices that may be connected to a cloud service. Fortunately, the principles described herein forego the need to have to manually classify each device into a device type. Nevertheless, to just give a flavor of the variety of types of devices there might be, there could be temperature sensors, wearables, rain sensors, medical implants, window shatter detectors, light switches, refrigerators, air flow detectors, light detectors, valves, drones, cameras, and so on practically infinitum.

One thing that each of these types of devices have is that, within each type, the communication characteristics are likely quite similar since the functionality of the devices is fairly well defined. For example, temperature sensors have a very specific function - to sense temperature. Thus, temperature sensors tend to communicate at a particular frequency, with a particular message size and type, using a particular communication protocol, and so forth. More generally stated, properly operating devices within any given type tend to have fairly consistent communication patterns. Significant deviations from such communication patterns can be an indicator that there is a hardware or software problem with the device, or that the device has been exposed to damage from the environment.

In Figure 1, the devices 101 are represented as having a particular shape, which symbolizes the type of device. For example, there is only one octagonal device 101N, symbolizing that the device 101N is of a unique type (a "first" device type). There are two square devices 101C and 101U that are both square, representing that the two devices are of the same type - a second device type. Continuing this convention, there are three downward-pointing triangular devices 101G, 101O and 101Q that are each of a third device type. There are four trapezoidal devices 101A, 1011, 101L and 101S that are each of a fourth device type. There are five circular devices 101E, 101H, 101K, 101P and 101R that are each of a fifth device type. There are six upward-pointing triangular devices 101B, 101D, 101F, 101J, 101M and 101T.

This illustrated example will be referred to as the "subject example". However, the subject example is provided only by way of example. The principles described herein applies regardless of the number of device types there are amongst the devices 101, and regardless of the number of devices per device type. Furthermore, the precise device type is also not important to the broader principles described herein. For instance, the six upward-pointing triangular devices 101B, 101D, 101F, 101J, 101M and 101T may all be of the same type (e.g., temperature sensors) or they may be of the same type based on operational characteristics. There is no need for the devices 101 to be classified into types prior to implementing the principles described herein, because the principles described herein classifies these devices automatically.

As represented by arrow 105, each of the devices 101 is connected to the Internet 110 either directly, or through a proxy computing system. Furthermore, as also represented by arrow 105, each of the devices 101 reports at least some of its operations over the Internet 110.

Figure 2 illustrates an environment 200 that is a particular example of the environment 100 of Figure 1. Here, as represented by line 215, the devices 101 are each connected, directly or through a proxy computing system, with one or more of the cloud services 210. Cloud service(s) 210 are computing services that are offered in a cloud computing environment. As an example, all of the devices 101 might be connected to one of the service(s) 210 - service 211. Alternatively, as represented by the ellipsis 212, the devices 101 might be connected to different cloud services 210 depending on the device.

The environment 200 also includes one or more logs 220. Each device reports operational characteristics that are then logged into the log(s) 220. As an example, each device 101 might log its operations into the same log 221. Alternatively, as represented by the ellipsis 222, the devices 101 may log their operations into different logs depending on the device. In one example, the log(s) 220 are maintained by a cloud storage service.

Figure 3 illustrates a flowchart of a method 300 for monitoring operations of a plurality of different types of devices to determine and alert when operation of devices has varied from usual operation. The method 300 may be performed by an actual cloud service with which the devices 101 communicate (e.g., service 211). Alternatively, the method 300 may be performed by any other cloud service or system (such as the computing system 800 described below for Figure 8). In that case, the method 300 may be performed by one or more processors (e.g., the hardware processing unit 802) of the computing system 800 executing computer-executable instructions that are on one or more computer-readable media (e.g., memory 804). The server, system, or service that performs the method 300 will be referred to herein as the "monitoring system".

The method 300 includes the monitoring system measuring operations of multiple devices that have reported operations over the Internet (act 301). For instance, in the context of Figure 1, the devices 101 have reported operations (as represented by arrow 105) over the Internet 110. As an example of this, referring to Figure 2, the devices 101 may report their operations for recording within the log(s) 220. The monitoring system measures operations by evaluating the reported operations. For example, the operation of the devices may be measured by evaluating the log(s) 220.

This measurement may be performed by placing an identifier for each of the devices in multi-dimensional space - where each dimension corresponds to an operational characteristic. Thus, the identifier placement within the multi-dimensional space represents operation of the corresponding device across several operational characteristics.

Figure 4 illustrates an example multi-dimensional space 400 in which identifiers for the devices of Figures 1 and 2 are mapped, each dimensional representing an operational parameter. Operational characteristic A (where "A" can be any operational characteristic) is plotted on the horizontal axis. Operational characteristic B (where "B" can also be any operational characteristic) is plotted on the vertical axis.

There are twenty-one points labelled A through U (corresponding to devices 101A through 101U, respectively) plotted in this two-dimensional space. This example implementation of the method 300 involved the monitoring system evaluating the log(s) 220 to identify the performance of each of devices 101A through 101U in each of the two dimensions, and plotting the performance for each device in this multi-dimensional space

In Figure 4, the example multi-dimensional space is kept quite simple with only two dimensions and only twenty-one devices. This is simply because two-dimensions are easy to illustrate and conceptualize, and once understood, can be extended to any n-dimensional space (where "n" is any integer two or greater). However, the principles described herein are not limited to the nature of the operational characteristics, nor to the number of operational characteristics being monitored. Thus, the multi-dimensional space could have any number of dimensions - such as tens, hundreds, or even more.

Furthermore, the number of devices is twenty-one in this example simply because illustrating a large number of points may make the figures unduly complicated. In a real implementation, there may be thousands, millions, billions (or more) points plotted in a multi-dimensional space data structure that has large numbers of dimensions. Such spaces are difficult for humans to conceptualize, but computing systems can represent such spaces using complex data structures, and may operate upon such spaces by operating upon such complex structures.

Before explaining the method 300 of Figure 3 further with respect to subsequent states of the multi-dimensional space, example operational characteristics that may represent dimensions in this space will now be described. In one embodiment, the operational characteristics are operational communication pattern characteristics of the communication of the corresponding device over the Internet. As an example, the communication pattern characteristics may be characteristics of the communication between the device and a cloud service (such as between the devices 101 and the cloud service 211 of Figure 2). Examples of such communication pattern characteristics include command type (e.g., cloud service command type), message type, message size, communication protocol, communication frequency (and so forth) of communications from the device to the cloud service, or from the cloud service to the device, or both.

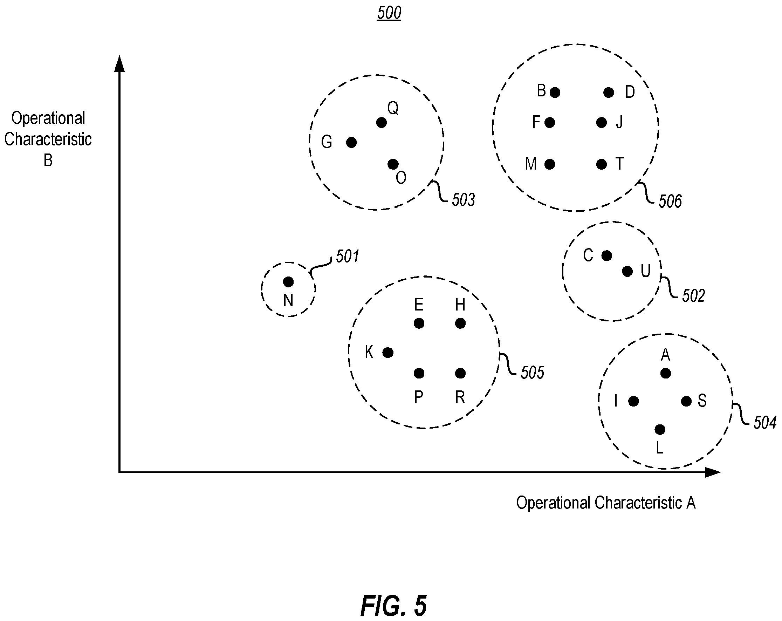

Referring back to Figure 3, based on the measurement (act 301), the devices are then grouped based on the reported operations (act 302). In the specific example of Figure 4, this grouping may be based on how their identifiers cluster within the multi-dimensional space. For instance, Figure 5 illustrates a multi-dimensional space 500 which is the same as the multi-dimensional space 400 of Figure 4, except now the groupings are shown based on how they cluster within the multi-dimensional space.

For example, identifier N is an outlier that is relatively far from other identifiers N. Accordingly, for now, identifier N (corresponding to device 101N of Figures 1 and 2) is assigned its own group 501. Identifiers C and U (corresponding to devices 101C and 101U) are clustered together, and thus they are both assigned to group 502 based on similarity of operation. Identifiers G, O and Q are assigned to group 503 based on their clustering, and thus their respective devices' (i.e., devices 101G, 101O and 101Q) similarity of operation. Identifiers A, I, L and S are assigned to group 504 based on their clustering, and thus their respective devices' (i.e., devices 101A, 1011, 101L and 101S) similarity of operation. Identifiers E, H, K, P and R are assigned to group 505 based on their clustering, and thus their respective devices' (i.e., devices 101E, 101H, 101K, 101P and 101R) similarity of operation. Finally, Identifiers B, D, F, J, M and T are assigned to group 506 based on their clustering, and thus their respective devices' (i.e., devices 101B, 101D, 101F, 101J, 101M and 101T) similarity of operation.

At this point, the types of devices are now grouped according to their shape as represented in Figure 1. Prior to the method beginning, the computing system may have had no concept for what type of device corresponded to each identifier. However, after completing act 502, based on measuring device operations (act 501) and grouping based on similarity of operation (act 502), the monitoring system now has at least an initial guess as to which device is of what type.

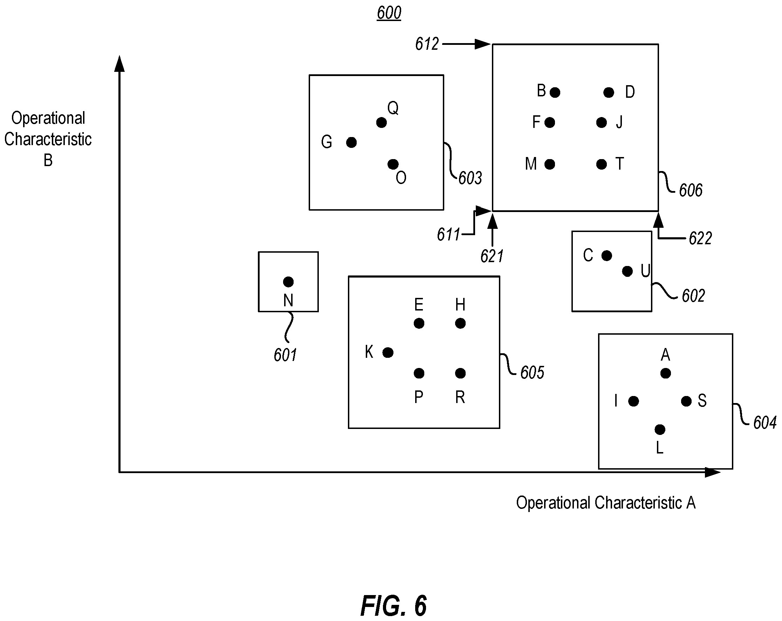

Now that there is groupings of identifiers, the remaining portions of the method 300 (that is within dashed-lined box 310) may be performed for each group. The monitoring system defines a standard operation for the corresponding group of devices (act 311). As an example, Figure 6 illustrates a multi-dimensional space 600 that is the same as the multi-dimensional space 400 of Figure 4, except that now standard operation for the corresponding group of devices is now illustrated.

Thus, the group 501 has corresponding defined standard operation within range 601, group 502 has a defined standard operation within range 602, group 503 has a defined standard operation within range 503, group 504 has a defined standard operation within range 604, group 505 has a defined standard operation within range 605, and group 506 has a defined standard operation within range 606.

More particularly focusing on range 606, the minimum range for operational characteristic A is at minimum limit 621, and the maximum range for operational characteristic A is at maximum limit 622. Similarly, the minimum range for operational characteristic B is at minimum limit 611, and the maximum range for operational characteristic B is at maximum limit 612. The acceptable defined ranges may be defined in other than orthogonal dimensional (with minimums and maximums in each dimension). Acceptable ranges could be more complex multi-dimensional shapes, or even be discontinuous. Nevertheless, in this embodiment, for a given position within the multi-dimensional space, it can be determined whether the corresponding devices falls within acceptable standard operations for a given type, or whether the device does not.

In one embodiment, the region of standard operations for the type may instead be a probability distribution. In that case, for a given position within the multi-dimensional space, a probability that the devices is of a corresponding type can be determined from the position within the probability distribution. This may result in an estimate (rather than a concrete determination) of whether a given device is of a particular type, and whether its operation has deviated from expected operation.

Returning back to Figure 3, the method 300 then includes continuing to monitor device operations (act 312). This may occur by continuing to analyze operation reports provided by each device. When this process continues, in may be that one or more operations of the device may change to one degree or another. While the operation of the device still stays within the defined standard operation for the group the device belongs to ("No" in decision block 313), the monitoring simply continues. However, if the operation of the devices falls outside of the defined standard operation for the group the device belongs to ("Yes" in decision block 313). The computing system raises an alert (act 514).

In the context of the multi-dimensional space, this monitoring may result in the movement of positions of identifiers in the multi-dimensional space. This movement may be evaluated to determine whether the movement results in the device operation falling outside of the defined standard operation.

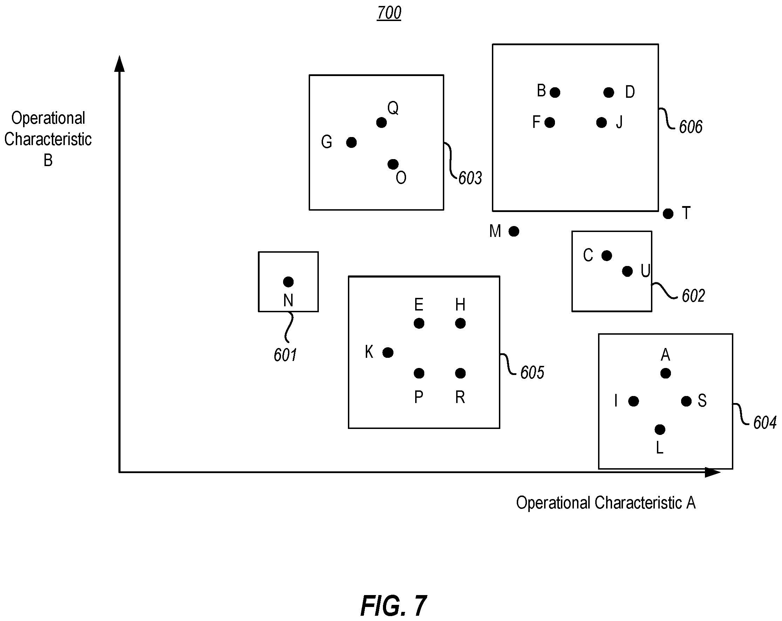

As an example, Figure 7 illustrates multi-dimensional space 700, which is the same as the multi-dimensional space 600 of Figure 6. However, the position of identifier M has now moved to outside of the defined standard operation 606 for the group 506 that the identifier M (and the device 101M) belongs to. Not only that, but the position of identifier T has also moved to outside of the defined standard operation 606 for the group 506 that the identifier T (and the device 101T) belongs to. Thus, an alert regarding device 101M may be provided to a user or system associated with device 101M (act 514). Furthermore, an alert regarding device 101T may be provided to the user or system associated with device 101T (also act 514).

The monitoring system may do other activities in response to determining that a device's operation falls outside of the defined standard operation. For example, the monitoring system could redefine the standard operation or probability distribution for the corresponding group. Alternatively, the monitoring system could split or combine groups, or place the device into a different group. For instance, if over time, the performance of the device 101N moved towards the defined standard operation region 605, the identifier N might be placed within group 505, with perhaps the defined standard operation region 605 being redefined to include the identifier N.

The monitoring system may perform more complex inter-device activity. For instance, in the case of Figure 7, two devices 101M and 101T left their standard operation region 606 at about the same time. This implies that there could be a causal relation between the devices. The monitored system could estimate whether there is a causal relation and what the estimated cause of the variance might be. As an example, multiple rain sensors may fail close to the same time. The monitoring system may have learned previously that devices having these communication patterns (like that of a rain sensor) may fail during a flood or electrical short. The monitoring system may report the failure in the devices, and also estimate that there may be an electrical short or flood that is causing the problem.

Accordingly, the principles described herein allow for effective monitoring of performance of a variety of devices, without requiring the devices be categorized beforehand. Thus, as the Internet of Things is augmented with new types of devices with new communication patterns, the monitoring may dynamically adjust. Furthermore, the monitoring does not require any software updates in the devices itself. Accordingly, so long as the devices report their operations, the monitoring system continues to determine whether the operations are proper. Thus, an adaptive mechanism has been described for monitoring and alerting regarding performance of a wide number of and variety of devices.

Note that the performance of the methods 300 may be performed by a computing system. Accordingly, a computing system will now be described with respect to Figure 8. Computing systems are now increasingly taking a wide variety of forms. Computing systems may, for example, be handheld devices, appliances, laptop computers, desktop computers, mainframes, distributed computing systems, datacenters, or even devices that have not conventionally been considered a computing system, such as wearables (e.g., glasses, watches, bands, and so forth). In this description and in the claims, the term "computing system" is defined broadly as including any device or system (or combination thereof) that includes at least one physical and tangible processor, and a physical and tangible memory capable of having thereon computer-executable instructions that may be executed by a processor. The memory may take any form and may depend on the nature and form of the computing system. A computing system may be distributed over a network environment and may include multiple constituent computing systems.

As illustrated in Figure 8, in its most basic configuration, a computing system 800 typically includes at least one hardware processing unit 802 and memory 804. The memory 804 may be physical system memory, which may be volatile, non-volatile, or some combination of the two. The term "memory" may also be used herein to refer to non-volatile mass storage such as physical storage media. If the computing system is distributed, the processing, memory and/or storage capability may be distributed as well.

The computing system 800 has thereon multiple structures often referred to as an "executable component". For instance, the memory 804 of the computing system 800 is illustrated as including executable component 806. The term "executable component" is the name for a structure that is well understood to one of ordinary skill in the art in the field of computing as being a structure that can be software, hardware, or a combination thereof. For instance, when implemented in software, one of ordinary skill in the art would understand that the structure of an executable component may include software objects, routines, methods that may be executed on the computing system, whether such an executable component exists in the heap of a computing system, or whether the executable component exists on computer-readable storage media.

In such a case, one of ordinary skill in the art will recognize that the structure of the executable component exists on a computer-readable medium such that, when interpreted by one or more processors of a computing system (e.g., by a processor thread), the computing system is caused to perform a function. Such structure may be computer-readable directly by the processors (as is the case if the executable component were binary). Alternatively, the structure may be structured to be interpretable and/or compiled (whether in a single stage or in multiple stages) so as to generate such binary that is directly interpretable by the processors. Such an understanding of example structures of an executable component is well within the understanding of one of ordinary skill in the art of computing when using the term "executable component".

The term "executable component" is also well understood by one of ordinary skill as including structures that are implemented exclusively or near-exclusively in hardware, such as within a field programmable gate array (FPGA), an application specific integrated circuit (ASIC), or any other specialized circuit. Accordingly, the term "executable component" is a term for a structure that is well understood by those of ordinary skill in the art of computing, whether implemented in software, hardware, or a combination. In this description, the term "component" or "vertex" may also be used. As used in this description and in the case, this term (regardless of whether the term is modified with one or more modifiers) is also intended to be synonymous with the term "executable component" or be specific types of such an "executable component", and thus also have a structure that is well understood by those of ordinary skill in the art of computing.

In the description that follows, embodiments are described with reference to acts that are performed by one or more computing systems. If such acts are implemented in software, one or more processors (of the associated computing system that performs the act) direct the operation of the computing system in response to having executed computer-executable instructions that constitute an executable component. For example, such computer-executable instructions may be embodied on one or more computer-readable media that form a computer program product. An example of such an operation involves the manipulation of data.

The computer-executable instructions (and the manipulated data) may be stored in the memory 804 of the computing system 800. Computing system 800 may also contain communication channels 808 that allow the computing system 800 to communicate with other computing systems over, for example, network 810.

While not all computing systems require a user interface, in some embodiments, the computing system 800 includes a user interface 812 for use in interfacing with a user. The user interface 812 may include output mechanisms 812A as well as input mechanisms 812B. The principles described herein are not limited to the precise output mechanisms 812A or input mechanisms 812B as such will depend on the nature of the device. However, output mechanisms 812A might include, for instance, speakers, displays, tactile output, holograms, virtual reality, and so forth. Examples of input mechanisms 812B might include, for instance, microphones, touchscreens, holograms, virtual reality, cameras, keyboards, mouse or other pointer input, sensors of any type, and so forth.

Embodiments described herein may comprise or utilize a special purpose or general-purpose computing system including computer hardware, such as, for example, one or more processors and system memory, as discussed in greater detail below. Embodiments described herein also include physical and other computer-readable media for carrying or storing computer-executable instructions and/or data structures. Such computer-readable media can be any available media that can be accessed by a general purpose or special purpose computing system. Computer-readable media that store computer-executable instructions are physical storage media. Computer-readable media that carry computer-executable instructions are transmission media. Thus, by way of example, and not limitation, embodiments can comprise at least two distinctly different kinds of computer-readable media: storage media and transmission media.

Computer-readable storage media include RAM, ROM, EEPROM, CD-ROM or other optical disk storage, magnetic disk storage or other magnetic storage devices, or any other physical and tangible storage medium which can be used to store desired program code means in the form of computer-executable instructions or data structures and which can be accessed by a general purpose or special purpose computing system.

A "network" is defined as one or more data links that enable the transport of electronic data between computing systems and/or components and/or other electronic devices. When information is transferred or provided over a network or another communications connection (either hardwired, wireless, or a combination of hardwired or wireless) to a computing system, the computing system properly views the connection as a transmission medium. Transmissions media can include a network and/or data links which can be used to carry desired program code means in the form of computer-executable instructions or data structures and which can be accessed by a general purpose or special purpose computing system. Combinations of the above should also be included within the scope of computer-readable media.

Further, upon reaching various computing system components, program code means in the form of computer-executable instructions or data structures can be transferred automatically from transmission media to storage media (or vice versa). For example, computer-executable instructions or data structures received over a network or data link can be buffered in RAM within a network interface component (e.g., a "NIC"), and then eventually transferred to computing system RAM and/or to less volatile storage media at a computing system. Thus, it should be understood that readable media can be included in computing system components that also (or even primarily) utilize transmission media.

Computer-executable instructions comprise, for example, instructions and data which, when executed at a processor, cause a general-purpose computing system, special purpose computing system, or special purpose processing device to perform a certain function or group of functions. Alternatively, or in addition, the computer-executable instructions may configure the computing system to perform a certain function or group of functions. The computer executable instructions may be, for example, binaries or even instructions that undergo some translation (such as compilation) before direct execution by the processors, such as intermediate format instructions such as assembly language, or even source code.

Those skilled in the art will appreciate that the invention may be practiced in network computing environments with many types of computing system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, datacenters, wearables (such as glasses or watches) and the like. The invention may also be practiced in distributed system environments where local and remote computing systems, which are linked (either by hardwired data links, wireless data links, or by a combination of hardwired and wireless data links) through a network, both perform tasks. In a distributed system environment, program components may be located in both local and remote memory storage devices.

Those skilled in the art will also appreciate that the invention may be practiced in a cloud computing environment, which is supported by one or more datacenters or portions thereof. Cloud computing environments may be distributed, although this is not required. When distributed, cloud computing environments may be distributed internationally within an organization and/or have components possessed across multiple organizations.

In this description and the following claims, "cloud computing" is defined as a model for enabling on-demand network access to a shared pool of configurable computing resources (e.g., networks, servers, storage, applications, and services). The definition of "cloud computing" is not limited to any of the other numerous advantages that can be obtained from such a model when properly deployed.

For instance, cloud computing is currently employed in the marketplace so as to offer ubiquitous and convenient on-demand access to the shared pool of configurable computing resources. Furthermore, the shared pool of configurable computing resources can be rapidly provisioned via virtualization and released with low management effort or service provider interaction, and then scaled accordingly.

A cloud computing model can be composed of various characteristics such as on-demand, self-service, broad network access, resource pooling, rapid elasticity, measured service, and so forth. A cloud computing model may also come in the form of various application service models such as, for example, Software as a service ("SaaS"), Platform as a service ("PaaS"), and Infrastructure as a service ("IaaS"). The cloud computing model may also be deployed using different deployment models such as private cloud, community cloud, public cloud, hybrid cloud, and so forth. In this description and in the claims, a "cloud computing environment" is an environment in which cloud computing is employed.

## Claims

1. A method (300) for monitoring operations of a plurality of different types of devices to determine and alert when operation of devices has varied from usual operation, the method comprising:
measuring operations of a plurality of devices that have reported operations over the Internet (301);
based on the measurement, grouping the plurality of devices based on the reported operations to thereby form multiple groups of devices grouped by operational similarity (302);
for each of at least some of the multiple groups of devices, defining standard operation for the corresponding group of devices (311); and
for at least one of the groups for which standard operation is defined, monitoring operation of a plurality of devices in that group to determine that operation of one of the monitored devices in that group has varied from the defined standard operation for that group (312); and
in response to determining that operation of one or the monitored devices has varied from the defined standard operation (313), alerting about the monitored device varying from the defined standard operation (314), the method furthermore comprising:
the defined standard operation of each of the plurality of devices being based on multiple operational characteristics,
the measuring operations of a plurality of devices that have reported operations over the Internet comprising placing an identifier for each of the plurality of devices in multi-dimensional space, where each dimension corresponds to one of the multiple operational characteristics,
the grouping the plurality of devices based on the reported operations to thereby form multiple groups of devices grouped by operational similarity comprising grouping the plurality of devices based on how their identifiers cluster within the multi-dimensional space, and
the monitoring operation of a plurality of devices in a particular group to determine that operation of one of the monitored devices in the particular group has varied from the defined standard operation for that group comprising monitoring movement of position of identifiers of the particular group within the multi-dimensional space to determine that the identifier for the one of the monitored devices has moved away from a cluster associated with the particular group and in case the identifier moved towards a cluster of another group, the identifier is placed within the other group, with perhaps the cluster of the other group being redefined to include the identifier

2. The method in accordance with Claim 1, wherein the defined standard operation of each of the plurality of devices is at least in part based, for least some of the plurality of devices, on a standard communication pattern between the device and a cloud service.

3. The method in accordance with Claim 2, wherein the defined standard operation of each of the plurality of devices is based on multiple operational communication pattern characteristics including, for least some of the plurality of devices, a cloud service command identity or type issued by the device to a cloud service.

4. The method in accordance with Claim 2, wherein the defined standard operation of each of the plurality of devices is based on multiple operational communication pattern characteristics including, for least some of the plurality of devices, a type of message exchanged between the device and a cloud service.

5. The method in accordance with Claim 2, wherein the defined standard operation of each of the plurality of devices is based on multiple operational communication pattern characteristics including, for least some of the plurality of devices, a size of message exchanged between the device and a cloud service.

6. The method in accordance with Claim 2, wherein the defined standard operation of each of the plurality of devices is based on multiple operational communication pattern characteristics including, for least some of the plurality of devices, a usual frequency of messages exchanged between the device and a cloud service.

7. The method in accordance with Claim 2, wherein the defined standard operation of each of the plurality of devices is based on multiple operational communication pattern characteristics including, for least some of the plurality of devices, a protocol used to exchange messages between the device and a cloud service.

8. The method in accordance with Claim 1, the grouping of the plurality of devices based on the reported operations to thereby form multiple groups of devices grouped by operational similarity comprising:
estimating a probability that each of at least some of the plurality of devices are in each of at least one of the plurality of groups.

9. A computer system (800) comprising:
one or more processors (802); and
one or more computer-readable media having stored thereon computer-executable instructions that are structured such that, when executed by the one or more processors, cause the computer system to perform a method (300) for monitoring operations of a plurality of different types of devices to determine and alert when operation of devices has varied from usual operation, the method comprising:
measuring operations of a plurality of devices that have reported operations over the Internet (301);
based on the measurement, grouping the plurality of devices based on the reported operations to thereby form multiple groups of devices grouped by operational similarity (302);
for each of at least some of the multiple groups of devices, defining standard operation for the corresponding group of devices (311); and
for at least one of the groups for which standard operation is defined, monitoring operation of a plurality of devices in that group to determine that operation of one of the monitored devices in that group has varied from the defined standard operation for that group (312); and
in response to determining that operation of one or the monitored devices has varied from the defined standard operation (313), alerting about the monitored device varying from the defined standard operation (314), the method furthermore comprising:
the defined standard operation of each of the plurality of devices being based on multiple operational characteristics,
the measuring operations of a plurality of devices that have reported operations over the Internet comprising placing an identifier for each of the plurality of devices in multi-dimensional space, where each dimension corresponds to one of the multiple operational characteristics,
the grouping the plurality of devices based on the reported operations to thereby form multiple groups of devices grouped by operational similarity comprising grouping the plurality of devices based on how their identifiers cluster within the multi-dimensional space, and
the monitoring operation of a plurality of devices in a particular group to determine that operation of one of the monitored devices in the particular group has varied from the defined standard operation for that group comprising monitoring movement of position of identifiers of the particular group within the multi-dimensional space to determine that the identifier for the one of the monitored devices has moved away from a cluster associated with the particular group and in case the identifier moved towards a cluster of another group, the identifier is placed within the other group, with perhaps the cluster of the other group being redefined to include the identifier

## Patentansprüche

1. Verfahren (300) zum Überwachen des Betriebs einer Vielzahl von verschiedenen Arten von Vorrichtungen, um zu bestimmen und zu warnen, wenn der Betrieb von Vorrichtungen von dem üblichen Betrieb abweicht, wobei das Verfahren Folgendes umfasst:
Messen des Betriebs einer Vielzahl von Vorrichtungen, die Betrieb über das Internet gemeldet hat (301);
basierend auf der Messung, Gruppieren der Vielzahl von Vorrichtungen basierend auf dem gemeldeten Betrieb, um dadurch mehrere Gruppen von Vorrichtungen zu bilden, die nach Ähnlichkeit des Betriebs gruppiert sind (302);
für jede von mindestens einigen der mehreren Gruppen von Vorrichtungen, Definieren eines Standardbetriebs für die entsprechende Gruppe von Vorrichtungen (311); und
für mindestens eine der Gruppen, für die der Standardbetrieb definiert ist, Überwachen des Betriebs einer Vielzahl von Vorrichtungen in dieser Gruppe, um zu bestimmen, dass der Betrieb einer der überwachten Vorrichtungen in dieser Gruppe von dem definierten Standardbetrieb für diese Gruppe abgewichen ist (312); und
als Reaktion auf Bestimmen, dass der Betrieb einer der überwachten Vorrichtungen von dem definierten Standardbetrieb (313) abgewichen ist, Warnen, dass die überwachte Vorrichtung von dem definierten Standardbetrieb abweicht (314), wobei das Verfahren des Weiteren umfasst:
dass der definierte Standardbetrieb jeder der Vielzahl von Vorrichtungen auf mehreren Betriebsmerkmalen basiert,
dass das Messen des Betriebs einer Vielzahl von Vorrichtungen, die einen Betrieb über das Internet gemeldet haben, Platzieren einer Kennung für jede der Vielzahl von Vorrichtungen im mehrdimensionalen Raum umfasst, wobei jede Dimension einem der mehreren Betriebsmerkmale entspricht,
dass das Gruppieren der Vielzahl von Vorrichtungen basierend auf den gemeldeten Betrieben, um dadurch mehrere Gruppen von Vorrichtungen zu bilden, die nach Ähnlichkeit des Betriebs gruppiert sind, Gruppieren der Vielzahl von Vorrichtungen basierend darauf umfasst, wie sich ihre Kennungen innerhalb des mehrdimensionalen Raums gruppieren, und
dass das Überwachen des Betriebs einer Vielzahl von Vorrichtungen in einer bestimmten Gruppe, um zu bestimmen, dass der Betrieb einer der überwachten Vorrichtungen in der bestimmten Gruppe von dem definierten Standardbetrieb für diese Gruppe abgewichen ist, Überwachen der Bewegung der Position von Kennungen der bestimmten Gruppe innerhalb des mehrdimensionalen Raums umfasst, um zu bestimmen, dass sich die Kennung für die eine der überwachten Vorrichtungen von einem Cluster, der der bestimmten Gruppe zugeordnet ist, wegbewegt hat, und für den Fall, dass sich die Kennung in Richtung eines Clusters einer anderen Gruppe bewegt hat, die Kennung innerhalb der anderen Gruppe platziert wird, wobei möglicherweise der Cluster der anderen Gruppe neu definiert wird, um die Kennung zu beinhalten.

2. Verfahren nach Anspruch 1, wobei der definierte Standardbetrieb jeder der Vielzahl von Vorrichtungen mindestens teilweise, für mindestens einige der Vielzahl von Vorrichtungen, auf einem Standard-Kommunikationsmuster zwischen der Vorrichtung und einem Cloud-Dienst basiert.

3. Verfahren nach Anspruch 2, wobei der definierte Standardbetrieb jeder der Vielzahl von Vorrichtungen auf mehreren betrieblichen Kommunikationsmustereigenschaften basiert, die für mindestens einige der Vielzahl von Vorrichtungen eine Cloud-Dienst-Befehlsidentität oder -art beinhalten, die von der Vorrichtung an einen Cloud-Dienst ausgegeben wird.

4. Verfahren nach Anspruch 2, wobei der definierte Standardbetrieb jeder der Vielzahl von Vorrichtungen auf mehreren betrieblichen Kommunikationsmustereigenschaften basiert, die für mindestens einige der Vielzahl von Vorrichtungen eine Art einer Nachricht beinhalten, die zwischen der Vorrichtung und einem Cloud-Dienst ausgetauscht wird.

5. Verfahren nach Anspruch 2, wobei der definierte Standardbetrieb jeder der Vielzahl von Vorrichtungen auf mehreren betrieblichen Kommunikationsmustereigenschaften basiert, die für mindestens einige der Vielzahl von Vorrichtungen eine Größe einer Nachricht beinhalten, die zwischen der Vorrichtung und einem Cloud-Dienst ausgetauscht wird.

6. Verfahren nach Anspruch 2, wobei der definierte Standardbetrieb jeder der Vielzahl von Vorrichtungen auf mehreren betrieblichen Kommunikationsmustereigenschaften basiert, die für mindestens einige der Vielzahl von Vorrichtungen eine übliche Häufigkeit von Nachrichten beinhalten, die zwischen der Vorrichtung und einem Cloud-Dienst ausgetauscht werden.

7. Verfahren nach Anspruch 2, wobei der definierte Standardbetrieb jeder der Vielzahl von Vorrichtungen auf mehreren betrieblichen Kommunikationsmustereigenschaften basiert, die für mindestens einige der Vielzahl von Vorrichtungen ein Protokoll beinhalten, das verwendet wird, um Nachrichten zwischen der Vorrichtung und einem Cloud-Dienst auszutauschen.

8. Verfahren nach Anspruch 1, wobei das Gruppieren der Vielzahl von Vorrichtungen basierend auf dem gemeldeten Betrieb, um dadurch mehrere Gruppen von Vorrichtungen zu bilden, die nach Ähnlichkeit des Betriebs gruppiert sind, umfasst:
Schätzen einer Wahrscheinlichkeit, dass jede von mindestens einigen der Vielzahl von Vorrichtungen in jeder von mindestens einer der Vielzahl von Gruppen ist.

9. Computersystem (800), umfassend:
einen oder mehrere Prozessoren (802); und
ein oder mehrere computerlesbare Medien, auf denen computerausführbare Anweisungen gespeichert sind, die so strukturiert sind, dass sie, wenn sie von dem einem oder den mehreren Prozessoren ausgeführt werden, das Computersystem veranlassen, ein Verfahren (300) zum Überwachen des Betriebs einer Vielzahl von verschiedenen Arten von Vorrichtungen auszuführen, um zu bestimmen und zu warnen, wenn der Betrieb von Vorrichtungen von dem üblichen Betrieb abweicht, wobei das Verfahren Folgendes umfasst:
Messen des Betriebs einer Vielzahl von Vorrichtungen, die Betrieb über das Internet gemeldet hat (301);
basierend auf der Messung, Gruppieren der Vielzahl von Vorrichtungen basierend auf dem gemeldeten Betrieb, um dadurch mehrere Gruppen von Vorrichtungen zu bilden, die nach Ähnlichkeit des Betriebs gruppiert sind (302);
für jede von mindestens einigen der mehreren Gruppen von Vorrichtungen, Definieren eines Standardbetriebs für die entsprechende Gruppe von Vorrichtungen (311); und
für mindestens eine der Gruppen, für die der Standardbetrieb definiert ist, Überwachen des Betriebs einer Vielzahl von Vorrichtungen in dieser Gruppe, um zu bestimmen, dass der Betrieb einer der überwachten Vorrichtungen in dieser Gruppe von dem definierten Standardbetrieb für diese Gruppe abgewichen ist (312); und
als Reaktion auf Bestimmen, dass der Betrieb einer der überwachten Vorrichtungen von dem definierten Standardbetrieb (313) abgewichen ist, Warnen, dass die überwachte Vorrichtung von dem definierten Standardbetrieb abweicht (314), wobei das Verfahren des Weiteren umfasst:
dass der definierte Standardbetrieb jeder der Vielzahl von Vorrichtungen auf mehreren Betriebsmerkmalen basiert,
dass das Messen des Betriebs einer Vielzahl von Vorrichtungen, die einen Betrieb über das Internet gemeldet haben, Platzieren einer Kennung für jede der Vielzahl von Vorrichtungen im mehrdimensionalen Raum umfasst, wobei jede Dimension einem der mehreren Betriebsmerkmale entspricht,
dass das Gruppieren der Vielzahl von Vorrichtungen basierend auf den gemeldeten Betrieben, um dadurch mehrere Gruppen von Vorrichtungen zu bilden, die nach Ähnlichkeit des Betriebs gruppiert sind, Gruppieren der Vielzahl von Vorrichtungen basierend darauf umfasst, wie sich ihre Kennungen innerhalb des mehrdimensionalen Raums gruppieren, und
dass das Überwachen des Betriebs einer Vielzahl von Vorrichtungen in einer bestimmten Gruppe, um zu bestimmen, dass der Betrieb einer der überwachten Vorrichtungen in der bestimmten Gruppe von dem definierten Standardbetrieb für diese Gruppe abgewichen ist, Überwachen der Bewegung der Position von Kennungen der bestimmten Gruppe innerhalb des mehrdimensionalen Raums umfasst, um zu bestimmen, dass sich die Kennung für die eine der überwachten Vorrichtungen von einem Cluster, der der bestimmten Gruppe zugeordnet ist, wegbewegt hat, und für den Fall, dass sich die Kennung in Richtung eines Clusters einer anderen Gruppe bewegt hat, die Kennung innerhalb der anderen Gruppe platziert wird, wobei möglicherweise der Cluster der anderen Gruppe neu definiert wird, um die Kennung zu beinhalten.

## Revendications

1. Procédé (300) permettant de surveiller les fonctionnements d'une pluralité de types différents de dispositifs pour déterminer que et pour alerter sur le fait que le fonctionnement des dispositifs a varié par rapport au fonctionnement habituel, le procédé comprenant :
la mesure des fonctionnements d'une pluralité de dispositifs, lesquels ont reporté des fonctionnements sur Internet (301) ;
le regroupement, en fonction de la mesure, de la pluralité de dispositifs en fonction des fonctionnements reportés pour former ainsi de multiples groupes de dispositifs regroupés par similarité fonctionnelle (302);
la définition, pour chacun des au moins certains des multiples groupes de dispositifs, d'un fonctionnement standard pour le groupe de dispositifs (311) correspondant ; et
la surveillance, pour l'au moins un des groupes pour lesquels le fonctionnement standard est défini, du fonctionnement de la pluralité de dispositifs dans ledit groupe pour déterminer que le fonctionnement de l'un des dispositifs surveillés dans ledit groupe a varié par rapport au fonctionnement standard défini pour ledit groupe (312) ; et
l'alerte, en réponse à la détermination du fait que le fonctionnement de l'au moins un dispositif surveillé a varié par rapport au fonctionnement standard (313) défini, sur le fait que le dispositif surveillé varie par rapport au fonctionnement standard (314) défini, le procédé comprenant en outre :
le fonctionnement standard défini de chacun de la pluralité de dispositifs étant basé sur de multiples caractéristiques fonctionnelles,
les fonctionnements de mesure de la pluralité de dispositifs, qui ont reporté des fonctionnements sur Internet comprenant le placement d'un identifiant pour chacun de la pluralité de dispositifs dans un espace multidimensionnel, où chaque dimension correspond à l'une des multiples caractéristiques fonctionnelles,
le regroupement de la pluralité de dispositifs en fonction des fonctionnements reportés pour former ainsi de multiples groupes de dispositifs regroupés par similarité fonctionnelle comprenant le regroupement de la pluralité de dispositifs en fonction de la manière dont leurs identifiants se groupent dans l'espace multidimensionnel, et
le fonctionnement de surveillance de la pluralité de dispositifs dans un groupe particulier pour déterminer que le fonctionnement de l'un des dispositifs surveillés dans le groupe particulier a varié par rapport au fonctionnement standard défini pour ledit groupe comprenant la surveillance du déplacement de la position des identifiants du groupe particulier dans l'espace multidimensionnel pour déterminer que l'identifiant de l'un des dispositifs surveillés s'est éloigné d'une grappe associée au groupe particulier et dans le cas où l'identifiant s'est déplacé vers une grappe d'un autre groupe, l'identifiant est placé dans l'autre groupe, avec peut-être la grappe de l'autre groupe étant redéfinie pour comprendre l'identifiant.

2. Procédé selon la revendication 1, dans lequel le fonctionnement standard défini de chacun de la pluralité de dispositifs est au moins partiellement basé, pour au moins certains de la pluralité de dispositifs, sur un modèle de communication standard entre le dispositif et un service en nuage.

3. Procédé selon la revendication 2, dans lequel le fonctionnement standard défini de chacun de la pluralité de dispositifs est basé sur de multiples caractéristiques du modèle de communication fonctionnelle comprenant, pour au moins certains de la pluralité de dispositifs, une identité ou un type de commande de service en nuage émis par le dispositif au service en nuage.

4. Procédé selon la revendication 2, dans lequel le fonctionnement standard défini de chacun de la pluralité de dispositifs est basé sur de multiples caractéristiques du modèle de communication fonctionnelle comprenant, pour au moins certains de la pluralité de dispositifs, un type de message échangé entre le dispositif et un service en nuage.

5. Procédé selon la revendication 2, dans lequel le fonctionnement standard défini de chacun de la pluralité de dispositifs est basé sur de multiples caractéristiques du modèle de communication fonctionnelle comprenant, pour au moins certains de la pluralité de dispositifs, une taille de message échangé entre le dispositif et un service en nuage.

6. Procédé selon la revendication 2, dans lequel le fonctionnement standard défini de chacun de la pluralité de dispositifs est basé sur de multiples caractéristiques du modèle de communication fonctionnelle comprenant, pour au moins certains de la pluralité de dispositifs, une fréquence habituelle des messages échangés entre le dispositif et un service en nuage.

7. Procédé selon la revendication 2, dans lequel le fonctionnement standard défini de chacun de la pluralité de dispositifs est basé sur de multiples caractéristiques du modèle de communication fonctionnelle comprenant, pour au moins certains de la pluralité de dispositifs, un protocole utilisé pour échanger des messages entre le dispositif et un service en nuage.

8. Procédé selon la revendication 1, le regroupement de la pluralité de dispositifs en fonction des fonctionnements reportés pour former ainsi de multiples groupes de dispositifs regroupés par similarité fonctionnelle comprenant :
l'estimation d'une probabilité selon laquelle chacun d'au moins certains de la pluralité de dispositifs se trouve dans chacun d'au moins un de la pluralité de groupes.

9. Système informatique (800) comprenant :
un ou plusieurs processeurs (802); et
un ou plusieurs supports lisibles par ordinateur sur lesquels sont mémorisées des instructions exécutables par ordinateur, qui sont structurées de telle sorte que, lorsqu'elles sont exécutées par le ou les processeurs, elles amènent le système informatique à mettre en oeuvre un procédé (300) permettant de surveiller les fonctionnements d'une pluralité de types différents de dispositifs pour déterminer que et pour alerter sur le fait que le fonctionnement des dispositifs a varié par rapport au fonctionnement habituel, le procédé comprenant :
la mesure des fonctionnements d'une pluralité de dispositifs, lesquels ont reporté des fonctionnements sur Internet (301) ;
le regroupement, en fonction de la mesure, de la pluralité de dispositifs en fonction des fonctionnements reportés pour former ainsi de multiples groupes de dispositifs regroupés par similarité fonctionnelle (302);
la définition, pour chacun des au moins certains des multiples groupes de dispositifs, d'un fonctionnement standard pour le groupe de dispositifs (311) correspondant ; et
la surveillance, pour l'au moins un des groupes pour lesquels le fonctionnement standard est défini, du fonctionnement de la pluralité de dispositifs dans ledit groupe pour déterminer que le fonctionnement de l'un des dispositifs surveillés dans ledit groupe a varié par rapport au fonctionnement standard défini pour ledit groupe (312) ; et
l'alerte, en réponse à la détermination du fait que le fonctionnement de l'au moins un dispositif surveillé a varié par rapport au fonctionnement standard (313) défini, sur le fait que le dispositif surveillé varie par rapport au fonctionnement standard (314) défini, le procédé comprenant en outre :
le fonctionnement standard défini de chacun de la pluralité de dispositifs étant basé sur de multiples caractéristiques fonctionnelles,
les fonctionnements de mesure de la pluralité de dispositifs, qui ont reporté des fonctionnements sur Internet comprenant le placement d'un identifiant pour chacun de la pluralité de dispositifs dans un espace multidimensionnel, où chaque dimension correspond à l'une des multiples caractéristiques fonctionnelles,
le regroupement de la pluralité de dispositifs en fonction des fonctionnements reportés pour former ainsi de multiples groupes de dispositifs regroupés par similarité fonctionnelle comprenant le regroupement de la pluralité de dispositifs en fonction de la manière dont leurs identifiants se groupent dans l'espace multidimensionnel, et
le fonctionnement de surveillance de la pluralité de dispositifs dans un groupe particulier pour déterminer que le fonctionnement de l'un des dispositifs surveillés dans le groupe particulier a varié par rapport au fonctionnement standard défini pour ledit groupe comprenant la surveillance du déplacement de la position des identifiants du groupe particulier dans l'espace multidimensionnel pour déterminer que l'identifiant de l'un des dispositifs surveillés s'est éloigné d'une grappe associée au groupe particulier et dans le cas où l'identifiant s'est déplacé vers une grappe d'un autre groupe, l'identifiant est placé dans l'autre groupe, avec peut-être la grappe de l'autre groupe étant redéfinie pour comprendre l'identifiant.
